# FASCICULE DE BREVET EUROPEEN

(11) **EP 3 428 741 B1**
(45) Date de publication et mention de la délivrance du brevet: **13.05.2020**
(21) Numéro de dépôt: 17181526.9
(22) Date de dépôt: 14.07.2017
(51) Int. Cl.: G04B 37/02, G04B 37/10

(54) **SOUPAPE DE SECURITE POUR MONTRE**
SICHERHEITSVENTIL FÜR ARMBANDUHR
SAFETY VALVE FOR A WATCH

(43) Date de publication de la demande: 16.01.2019
(73) Titulaire: The Swatch Group Research and Development Ltd, 2074 Marin (CH)
(72) Inventeur: VUILLE, Pierry, 2338 Les Emibois (CH); WILLEMIN, Michel, 2515 Prêles (CH); MARTIN, Jean-Claude, 2037 Montmollin (CH)
(74) Mandataire: ICB SA

(56) Documents cités:
- EP-A1- 2 685 327
- BE-A- 661 940
- CH-A- 492 246
- GB-A- 303 102
- JP-A- S61 256 275

## Description

### Domaine technique

La présente invention se rapporte à une soupape de sécurité pour une montre et plus précisément pour une montre destinée à la plongée sous-marine. La présente invention se rapporte également à la montre munie de ladite soupape.

### Arrière-plan technologique

Les soupapes à hélium, aussi appelées valves à hélium, sont présentes sur certaines montres de plongée pour évacuer l'hélium infiltré dans la boîte de montre lors de plongées dites à saturation où les plongeurs respirent un mélange gazeux contenant de l'hélium et de l'oxygène. Cela leur permet de rester plusieurs jours à l'intérieur d'une cloche ou d'une station sous-marine. Durant ce laps de temps, l'hélium peut s'infiltrer dans la montre. En l'absence d'une telle soupape, la surpression intérieure générée par l'hélium infiltré peut lors de la phase de décompression générer des dégâts à la montre, comme par exemple la perte du verre qui se déchasse ou se brise.

Les soupapes à hélium peuvent être manuelles ou automatiques. Les soupapes manuelles fonctionnent simplement en serrant un élément d'étanchéité comme une tête, à la façon d'une couronne vissée, sur la carrure. Les soupapes manuelles ont pour désavantage que la montre n'est pas étanche si la soupape n'est pas resserrée après usage. Les soupapes automatiques se déclenchent automatiquement, comme leur nom l'indique, lorsque la différence de pression entre l'intérieur de la boîte de montre et l'environnement extérieur atteint un seuil critique. Un premier type de soupape automatique est celle sans blocage possible par l'utilisateur dont les fondements sont décrits dans le document CH 492 246. Celle-ci montée dans la majorité des cas à fleur de la carrure se présente sous forme d'une simple soupape limitant la pression à l'intérieur du boîtier de montre. L'inconvénient de ce type de soupape est son ouverture automatique sans possibilité de bloquer l'échappement de gaz et donc aussi l'entrée de fluide dans la montre, ce qui est problématique lorsque la décompression s'effectue en milieu humide. Pour pallier cet inconvénient, il existe un deuxième type de soupape automatique qui peut être commandée par l'utilisateur via le vissage/dévissage de la tête comme décrit dans le document EP 0 554 797. Eventuellement, ce deuxième type de soupape peut être intégré à un poussoir comme divulgué dans le document EP 2 685 327.

La soupape du document EP 0554 797 comporte une tête évidée munie d'une jupe et d'un noyau central prolongé par une tige. La tête peut être vissée sur un tube fixé à la carrure faisant partie de la boîte de la pièce d'horlogerie. Le tube comprend un fond traversé avec jeu par la tige. Le noyau et la tige sont entourés par un ressort de rappel à boudin. Le ressort prend appui sous la tête par sa première extrémité. La seconde extrémité du ressort prend appui sur une bague qui comprime à son tour un premier joint d'étanchéité disposé sur le fond du tube. Un second joint d'étanchéité est disposé sous la tête au droit du tube. Lorsque la tête est vissée sur la partie filetée du tube, le second joint est pressé contre le tube. Dès lors, la soupape est inopérante et complètement étanche grâce au second joint et à l'effet du ressort sur le premier joint. Lorsque la tête est dévissée, le second joint sous la tête n'est plus actif et le joint au fond du tube est susceptible de se soulever contre la force de rappel du ressort quand la pression régnant à l'intérieur de la boîte devient plus élevée que celle régnant à l'extérieur. Il s'ensuit l'évacuation du gaz depuis l'intérieur de la montre vers l'extérieur.

Ce deuxième type de soupape présente plusieurs désavantages. Tout d'abord, elle nécessite l'intervention de l'utilisateur pour être active. Quand la tête est maintenue en position fermée, la soupape est de facto inopérante et ne permettra pas d'éviter un problème d'éclatement de la glace en cas de surpression à l'intérieur de la boîte. Ensuite, la tête est montée sur le tube via un pas de vis. La tête étant principalement sur sa durée de vie en position de repos, c.à.d. en position vissée, il y a un risque que l'utilisateur ne soit plus en mesure de la desserrer le moment venu. Aussi, un serrage trop important de la tête sur le tube risque à la longue d'endommager le second joint positionné sous la tête. Inversement, un serrage trop faible de la tête risque de la maintenir en position ouverte.

### Résumé de l'invention

Pour remédier aux désavantages précités, la présente invention a pour objet principal de proposer une nouvelle soupape à hélium qui combine les avantages des soupapes automatiques respectivement avec et sans intervention de l'utilisateur tout en évitant les désavantages d'une liaison vis/écrou propre aux soupapes automatiques nécessitant l'intervention de l'utilisateur.

A cet effet, la présente invention propose une soupape avec deux configurations de fonctionnement. Dans une première configuration, la soupape est active au-delà d'un seuil modéré de surpression au sein de la boîte de montre à condition que l'utilisateur ait au préalable placé la tête de la soupape en position ouverte pour permettre l'échappement du gaz vers l'extérieur de la boîte de montre. Dans une deuxième configuration, la soupape est active au-delà d'un seuil critique de surpression au sein de la boîte de montre entraînant l'ouverture automatique de la tête. Ce fonctionnement avec deux seuils distincts de surpression est rendu possible grâce, d'une part, à une liaison de type came entre la tête et le tube de la soupape et, d'autre part, grâce à la présence au sein de la soupape de deux ressorts en série présentant des raideurs différentes. Plus précisément, dans la première configuration, l'ouverture et la fermeture de la tête est commandée manuellement par l'utilisateur via la mise en rotation de la tête et le coulissement de cette dernière sur une surface de came ménagée sur le tube transformant le mouvement de rotation en un mouvement de translation. Un premier ressort est dimensionné pour que la soupape soit opérationnelle dans cette configuration lorsqu'un seuil donné de surpression interne est atteint. Dans la deuxième configuration, un second ressort est dimensionné pour que la soupape soit opérationnelle pour un seuil donné de surpression qui est supérieur à celui de la première configuration. Dans cette deuxième configuration, l'ouverture automatique de la tête sous l'effet de la pression interne est rendue possible grâce au montage de la tête sur une surface de came qui contrairement au filet d'une vis permet un déplacement en translation pure de la tête. Par ailleurs, ce montage permet d'éviter les problèmes inhérents à un serrage ou desserrage trop important de la tête par l'utilisateur.

D'autres avantages ressortiront des caractéristiques exprimées dans les revendications, de la description détaillée de l'invention illustrée ci-après à l'aide des dessins annexés donnés à titre d'exemples nullement limitatifs.

### Brève description des figures

La figure 1 est une vue de face d'une partie de la soupape à hélium selon l'invention. La figure 2 représente une même vue de l'ensemble de la soupape à hélium munie de la tête avec les rampes ménagées dans cette dernière visibles en transparence. La figure 3 est une vue en perspective de la soupape à hélium selon l'invention.
La figure 4 représente un ressort ondulé qui, selon une variante préférée de l'invention, peut être utilisé dans la soupape à hélium.
Les figures 5 à 9 sont des vues en coupe de la soupape à hélium selon l'invention fixée à une boîte de montre. Aux figures 5 et 6, la tête est en position fermée. Aux figures 7 et 8, la tête est en position ouverte suite à l'intervention de l'utilisateur avec, à la figure 8, une différence de pression entre l'intérieur et l'extérieur de la boîte de montre entraînant l'échappement du gaz vers l'extérieur de la boîte de montre. A la figure 9, la tête est en position ouverte sans intervention de l'utilisateur suite à une surpression importante au sein de la boîte de montre.
Les figures 10 et 11 représentent une boîte de montre munie de la soupape à hélium selon l'invention avec respectivement la tête en position fermée et en position ouverte.

### Description détaillée de l'invention

La présente invention se rapporte à une soupape à hélium, qu'on qualifiera aussi de soupape de sécurité.

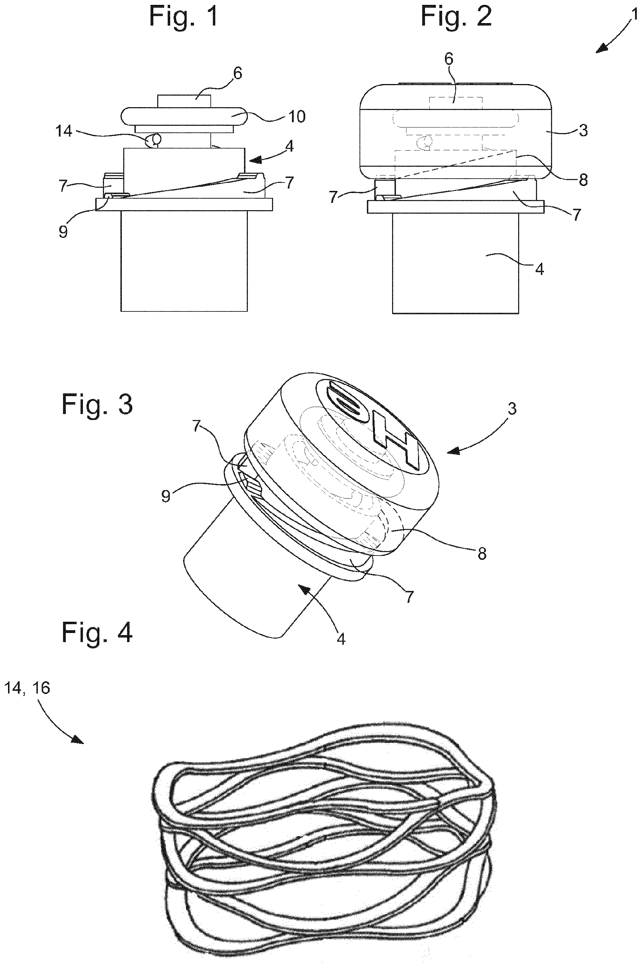

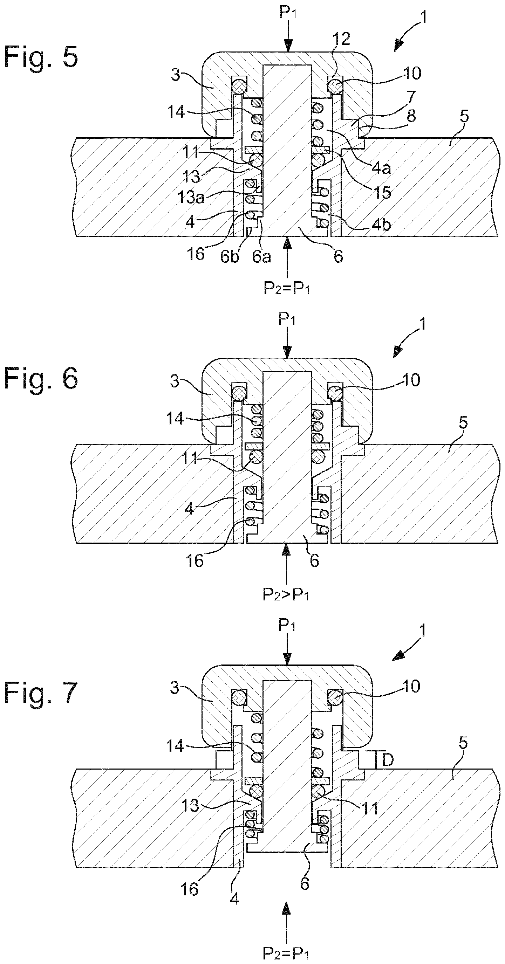

La soupape 1 représentée entre autres aux figures 2, 3 et 5 comporte une tête cylindrique creuse 3 montée sur un tube 4 destiné à être fixé à la boîte de montre 5 par exemple par vissage. La soupape 1 comporte une tige 6 solidaire de la tête 3 qui s'étend à l'intérieur du volume délimité par la tête creuse et par le tube. Selon l'invention, la tête 2 est montée mobile sur le tube 4 et se déplace axialement entre une position fermée et une position ouverte respectivement représentées aux figures 5 et 7. La tête peut se déplacer axialement selon un mouvement de translation pure ou se déplacer axialement via un mouvement de rotation transformé en mouvement de translation grâce un contact type came entre la tête et le tube. A cet effet, le tube 4 est muni sur sa face externe supérieure, et plus précisément sur sa face externe extérieure à la boîte de montre, d'une surface de came 7 formée d'une ou plusieurs rampes sur lesquelles coulisse la tête 3 lorsque l'utilisateur imprime un mouvement de rotation à cette dernière (figures 1 et 2). Le tube peut être muni d'une seule rampe occupant un arc de cercle compris entre 15 et 360°. De préférence, le tube est muni d'au moins deux rampes pour assurer un appui en plusieurs points de la tête sur le tube lorsque la tête est en position ouverte. Ces différentes rampes ont une même géométrie (même longueur, même hauteur) et, de préférence, elles sont disposées à équidistance pour que l'assiette de la tête soit perpendiculaire à l'axe longitudinal formé par le tube lorsque la tête est ouverte. En présence de deux rampes, chaque rampe occupe un arc de cercle inférieur ou égal à 180°. En présence de trois rampes, chaque rampe occupe un arc de cercle inférieur ou égal à 120°, etc. Dans l'exemple illustré aux figures 1 à 3, le tube 4 est muni sur sa face externe supérieure de deux rampes 7 occupant chacune un arc de cercle légèrement inférieur à 180°. Chaque rampe coopère avec des évidements 8 de forme complémentaire creusés dans la paroi intérieure de la tête 3 comme illustré aux figures 2, 3 et 5. De préférence, chaque rampe comporte à ses extrémités des crans 9 ou butées qui notifient à l'utilisateur qu'il est en bout de course. Il va de soi que ces crans ou butées peuvent également être utilisés pour positionner de manière exacte et reproductible l'inscription se trouvant sur la tête 3 de la soupape, de telle manière que la lecture et l'esthétisme de la pièce soit toujours identique en position fermée et / ou ouverte.

Comme représenté à la figure 5, la soupape 1 présente une double étanchéité avec, d'une part, un joint torique 10 disposé en regard de l'extrémité supérieure du tube 4 dans un logement annulaire 12 ménagé dans la tête 3 et, d'autre part, un autre joint 11, appelé ci-dessous premier joint, disposé au sein du tube 4. Selon l'invention, le volume intérieur du tube est scindé en deux chambres 4a, 4b séparées par une portée 13 traversée par la tige 6. Il y a une première chambre 4a sous la tête 3 suivie en direction de la base de la tige 6 d'une seconde chambre 4b. Les première 4a et seconde 4b chambres abritent respectivement le premier ressort 14 et le second ressort 16. Les deux chambres sont séparées par la portée 13 servant d'appui au premier joint torique 11 disposé dans la première chambre 4a. Cette portée peut être de forme tronconique comme dans les exemples ou éventuellement plane. Elle comporte une extension verticale 13a s'étendant vers la base de la tige 6 et coopérant avec un épaulement 6a pratiqué dans la tige 6 pour limiter le déplacement en translation de la tête en position ouverte.

Dans la première chambre 4a, le premier ressort 14 est enroulé autour de la tige 6. Ce premier ressort 14 prend appui à une extrémité sous la tête 3 et à l'autre extrémité sur une bague 15 qui comprime le premier joint 11 contre la portée 13. Dans la seconde chambre 4b, le second ressort 16 est enroulé autour de la tige 6. Il prend appui à une extrémité sur la portée 13 et à son autre extrémité sur un second épaulement 6b ménagé à la base de la tige 6. Ce second ressort 16 est dimensionné pour exercer une force de rappel sur la tête et maintenir une pression de fermeture suffisante pour garantir l'étanchéité de la soupape. Selon l'invention, il présente une raideur qui est supérieure à celle du premier ressort, la raideur des deux ressorts étant calculée en fonction des seuils de pression au-delà desquels la soupape doit être opérante. A titre d'exemple, le premier ressort 14 peut être dimensionné pour que la valeur de surpression à l'intérieur de la soupape qui libère le premier joint 11 soit supérieure ou égale à 1 bar, de préférence à 2 bar, tandis que le second ressort 16 peut être dimensionné pour libérer le joint 10 sous la tête 3 pour un delta de pression entre l'intérieur et l'extérieur supérieur ou égale à 3 bar, de préférence à 4 bar. Les ressorts peuvent être des ressorts hélicoïdaux. En variante préférée, il peut s'agir de ressorts crête à crête aussi appelés ressorts ondulés tels que représentés à la figure 4 qui offrent comme avantage d'occuper un volume moindre par rapport à un ressort hélicoïdal de raideur équivalente. La superposition de rondelles type schnorr ou belleville est aussi envisagée.

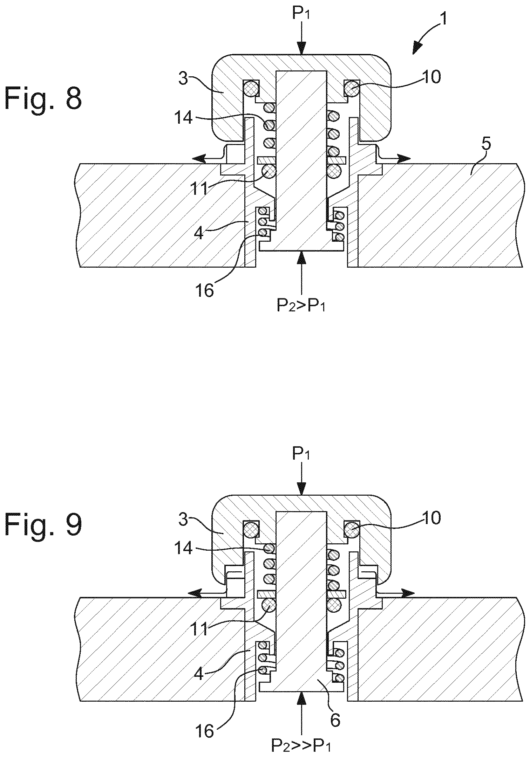

Les figures 5 à 9 illustrent le fonctionnement de la soupape selon l'invention. Aux figures 5 et 6, la tête est en position fermée, c.à.d. que l'utilisateur n'a pas mis en rotation la tête. En l'absence d'une différence de pression entre l'intérieur de la boîte de montre (pression P2) et l'environnement extérieur (pression P1=P2), les deux joints 10,11 sont comprimés et la soupape est complètement étanche (figure 5). En présence d'une surpression modérée à l'intérieur de la boîte de montre (P2>P1), la tige 6 est maintenue en position basse sous l'action de la force de rappel du second ressort 16 tandis que le premier joint 11 n'est plus actif sous l'action de la pression d'hélium soulevant ce dernier (figure 6). Néanmoins, l'étanchéité de la soupape est garantie par le joint 10 sous la tête. En présence d'une surpression importante à l'intérieur de la boîte de montre (P2>>P1), la force de rappel du second ressort 16 n'est plus à même de contrer la pression intérieure (figure 9). Dès lors, la tige 6 se soulève libérant les deux joints 10,11 et, par là même, permettant l'échappement du gaz via les deux chambres et l'espace entre la face externe du tube et la circonférence intérieure de la tête.

Lorsque l'utilisateur tourne la tête pour la placer en position ouverte comme montré aux figures 7 et 8, cette dernière se déplace axialement d'une distance D correspondant à la hauteur de la rampe, ce qui rend inactif le joint 10 sous la tête 3. Si la pression interne est égale à la pression externe (P2=P1), le premier joint 11 reste comprimé contre la portée d'appui 13 et dès lors la soupape reste étanche (figure 7). Par contre, lorsque la pression interne dépasse la pression externe (P2>P1) d'une valeur prédéfinie suffisante pour contrer la force de rappel du premier ressort 14, le premier joint 11 devient également inopérant, ce qui permet l'échappement du gaz à l'extérieur de la boîte de montre pour équilibrer les pressions (figure 8).

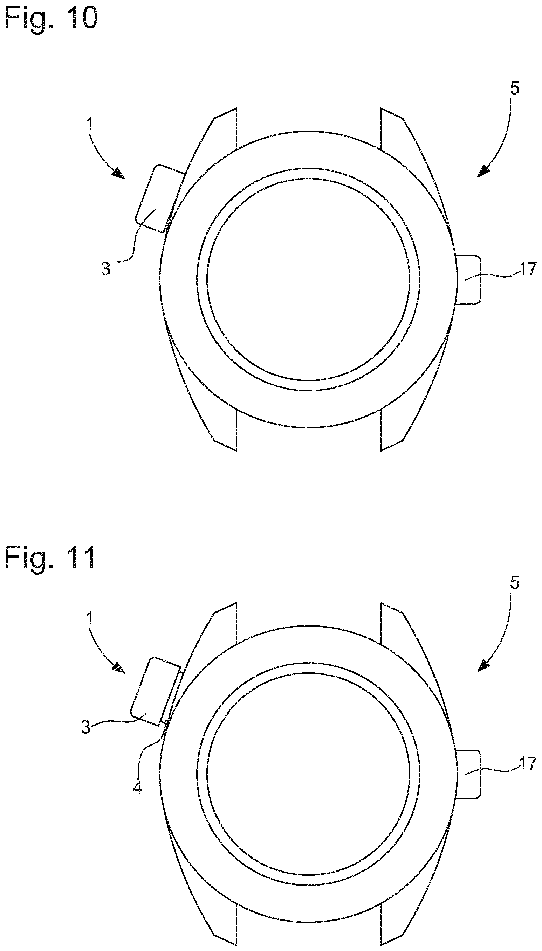

Pour finir, on peut visualiser sur les figures 10 et 11, la boîte de montre 5 comprenant la soupape 1 selon l'invention respectivement en positions fermée et ouverte. Optionnellement, le tube 4 visible lorsque la tête 3 est en position ouverte peut être marqué sur sa face externe avec un logo ou une couleur pour indiquer à l'utilisateur que la tête est en position ouverte.

### Légende

- (1): Soupape
- (3): Tête
- (4): Tube
(4a) Première chambre
(4b) Deuxième chambre
- (5): Boîte de montre
- (6): Tige
(6a) Premier épaulement
(6b) Second épaulement
- (7): Surface de came ou rampe
- (8): Evidement dans la tête
- (9): Cran sur la rampe
- (10): Joint sous la tête
- (11): Autre ou Premier joint
- (12): Logement
- (13): Portée
(13a) Butée
- (14): Premier ressort
- (15): Bague
- (16): Second ressort
- (17): Poussoir distinct de la soupape selon l'invention

## Revendications

1. Soupape de sécurité (1) comprenant un tube (4) destiné à être fixé à une boîte de montre (5) et une tête évidée (3) munie d'une tige (6) s'étendant dans sa partie évidée (3), ladite tête (3) étant montée mobile sur le tube (4) et apte à se déplacer le long d'un axe défini par la tige (6) entre une position ouverte dans laquelle un fluide en surpression dans la boîte de montre (5) est susceptible de s'échapper et une position fermée où l'échappement du fluide est empêché, ledit tube (4) comportant dans son volume intérieur un premier ressort (14) enroulé autour de la tige (6), le tube (4) étant en outre **caractérisé en ce que** :
- il est pourvu sur une face externe d'une surface de came (7) permettant respectivement un déplacement dit manuel de la tête (3) vers sa position ouverte suite à l'intervention d'un utilisateur et un déplacement dit automatique de la tête (3) vers sa position ouverte sous l'action d'une surpression critique au sein de la boîte de montre (5),
- il comporte à la suite du premier ressort (14) un deuxième ressort (16) enroulé autour de la tige (6) avec le second ressort (16) séparé du premier ressort (14) par une portée (13) traversée par la tige (6) et solidaire du tube (4), le premier ressort (14) étant dimensionné pour que la soupape (1) soit active en présence d'une surpression ΔPx au sein de la boîte de montre (5) après déplacement manuel de la tête (3) vers sa position ouverte, le deuxième ressort (16) étant dimensionné pour que la soupape (1) soit active en présence d'une surpression ΔPy au sein de la boîte de montre (5) entraînant le déplacement automatique de la tête (2) vers sa position ouverte, le deuxième ressort (16) ayant une raideur supérieure à celle du premier ressort (14) de manière à ce que ΔPy soit supérieure à ΔPx.

2. Soupape (1) selon la revendication 1, **caractérisée** en ce la surface de came (7) est formée d'une ou plusieurs rampes coopérant avec des évidements (8) de forme complémentaire creusés dans la paroi intérieure de la tête (3).

3. Soupape (1) selon la revendication 2, comportant deux rampes s'étendant chacune sur un arc de cercle inférieur ou égal à 180°.

4. Soupape selon la revendication 2 ou 3, **caractérisée en ce que** les rampes sont disposées à équidistance.

5. Soupape (1) selon l'une quelconque des revendications 2 à 4, **caractérisée en ce que** chaque rampe comporte à ses extrémités des crans d'arrêt (9).

6. Soupape (1) selon la revendication 5, **caractérisée en ce que** les crans d'arrêt (9) ou butées sont utilisées pour fixer de manière reproductible la position d'une inscription ou un logo ménagé sur la tête 3 en position fermée et/ou ouverte.

7. Soupape (1) selon l'une quelconque des revendications précédentes, **caractérisée en ce que** le tube (4) comporte dans son volume intérieur deux chambres (4a, 4b) séparées par la portée (13) avec successivement depuis la tête (3) une première chambre (4a) abritant le premier ressort (14) et une seconde chambre (4b) abritant le second ressort (16).

8. Soupape (1) selon l'une quelconque des revendications précédentes, **caractérisée en ce qu'**elle comprend un joint (10) disposé en regard d'une extrémité du tube (4) dans un logement annulaire (12) ménagé dans la tête (3) et un autre joint (11), aussi appelé premier joint, destiné à prendre appui sur la portée (13) lorsque ΔPx et ΔPy sont sensiblement égales à 0.

9. Soupape (1) selon la revendication 8, **caractérisée en ce que** la première chambre (4a) comporte une bague (15) disposée entre le premier ressort (14) et le premier joint (11), une extrémité du premier ressort (14) prenant appui sous la tête (3) et l'autre extrémité du premier ressort (14) prenant appui sur la bague (15) destinée à comprimer le premier joint (11) contre la portée (13) lorsque ΔPx et ΔPy sont sensiblement égales à 0.

10. Soupape (1) selon l'une quelconque des revendications précédentes, **caractérisée en ce qu'**une extrémité du second ressort (16) prend appui sur la portée (13) et l'autre extrémité du second ressort (16) prend appui sur un épaulement (6b) ménagé à la base de la tige (6).

11. Soupape (1) selon l'une quelconque des revendications précédentes, **caractérisée en ce que** la portée (13) comporte une butée (13a) coopérant avec la tige (6) pour limiter le déplacement axial de la tête (3) vers sa position ouverte.

12. Soupape (1) selon l'une quelconque des revendications précédentes, **caractérisée en ce que** le premier ressort (14) et le second ressort (16) sont des ressorts crête à crête.

13. Soupape (1) selon l'une quelconque des revendications précédentes, **caractérisée en ce que** ΔPx est supérieure ou égale à 0.1 bar, de préférence à 0.2 bar, et **en ce que** ΔPy est supérieure ou égale à 0.7 bar, de préférence à 1 bar.

14. Soupape (1) selon l'une quelconque des revendications précédentes, **caractérisée en ce que** le tube (4) comporte sur sa face externe un marquage.

15. Montre comprenant une boîte (5) formée d'une carrure, d'un fond et d'un verre délimitant un volume étanche dans lequel est monté un mouvement d'horlogerie muni de moyen d'affichage d'une information horaire, **caractérisée en ce qu'**une soupape (1) selon l'une quelconque des revendications 1 à 14 est montée sur la boîte (5).

## Patentansprüche

1. Sicherheitsventil (1), umfassend ein Rohr (4) zur Befestigung an einem Gehäuse einer tragbaren Uhr (5) und einen ausgehöhlten Kopf (3), der mit einem sich in seinen ausgehöhlten Teil (3) erstreckenden Schaft (6) versehen ist, wobei der Kopf (3) beweglich auf dem Rohr (4) montiert ist und entlang einer durch den Schaft (6) definierten Achse bewegbar ist zwischen einer offenen Position, in der ein unter Überdruck stehendes Fluid in dem Gehäuse einer tragbaren Uhr (5) austreten kann, und einer geschlossenen Position, in der das Austreten des Fluids verhindert wird, wobei das Rohr (4) in seinem Innenraum eine erste Feder (14) aufweist, die um den Schaft (6) gewickelt ist, wobei das Rohr (4) ferner **dadurch gekennzeichnet ist, dass**:
- es auf einer Außenseite mit einer Nockenfläche (7) versehen ist, die jeweils eine sogenannte manuelle Verschiebung des Kopfes (3) in seine offene Position nach dem Eingriff eines Benutzers und eine sogenannte automatische Verschiebung des Kopfes (3) in seine offene Position unter der Einwirkung eines kritischen Überdrucks innerhalb des Gehäuses einer tragbaren Uhr (5) ermöglicht,
- es nach der ersten Feder (14) eine um den Schaft (6) gewickelte zweite Feder (16) umfasst, wobei die zweite Feder (16) von der ersten Feder (14) durch eine Anlagefläche (13) getrennt ist, die vom Schaft (6) durchquert wird und fest mit dem Rohr (4) verbunden ist, wobei die erste Feder (14) so bemessen ist, dass das Ventil (1) bei Vorhandensein eines Überdrucks ΔPx im Inneren des Gehäuses einer tragbaren Uhr (5) nach der manuellen Verschiebung des Kopfes (3) in seine offene Position aktiv ist, wobei die zweite Feder (16) so bemessen ist, dass das Ventil (1) bei Vorhandensein eines Überdrucks ΔPy innerhalb des Gehäuses einer tragbaren Uhr (5) aktiv ist, wodurch sich der Kopf (2) automatisch in seine offene Position bewegt, wobei die zweite Feder (16) eine größere Steifigkeit als die erste Feder (14) aufweist, so dass ΔPy größer ist als ΔPx.

2. Ventil (1) nach Anspruch 1, **dadurch gekennzeichnet, dass** die Nockenfläche (7) durch eine oder mehrere Rampen gebildet wird, die mit komplementär geformten Aussparungen (8) zusammenwirken, die in der Innenwand des Kopfes (3) ausgehöhlt sind.

3. Ventil (1) nach Anspruch 2 mit zwei Rampen, die sich jeweils über einen Kreisbogen von weniger oder gleich 180° erstrecken.

4. Ventil nach Anspruch 2 oder 3, **dadurch gekennzeichnet, dass** die Rampen gleich beabstandet angeordnet sind.

5. Ventil (1) nach einem der Ansprüche 2 bis 4, **dadurch gekennzeichnet, dass** jede Rampe an ihren Enden Rasten (9) aufweist.

6. Ventil (1) nach Anspruch 5, **dadurch gekennzeichnet, dass** die Rasten (9) oder Anschläge verwendet werden, um die Position einer Aufschrift oder eines Logos auf dem Kopf (3) in der geschlossenen und/oder offenen Position wiederholbar zu fixieren.

7. Ventil (1) nach einem der vorstehenden Ansprüche, **dadurch gekennzeichnet, dass** das Rohr (4) in seinem Innenraum zwei durch die Anlagefläche (13) getrennte Kammern (4a, 4b) aufweist, wobei vom Kopf (3) aus nacheinander eine erste Kammer (4a) die erste Feder (14) und eine zweite Kammer (4b) die zweite Feder (16) aufnimmt.

8. Ventil (1) nach einem der vorstehenden Ansprüche, **dadurch gekennzeichnet, dass** es eine Dichtung (10) umfasst, die gegenüber einem Ende des Rohrs (4) in einem ringförmig ausgebildeten Aufnahmeraum (12) im Kopf (3) angeordnet ist, und eine weitere Dichtung (11), auch erste Dichtung genannt, die dazu bestimmt ist, auf der Anlagefläche (13) aufzuliegen, wenn ΔPx und ΔPy im Wesentlichen gleich 0 sind.

9. Ventil (1) nach Anspruch 8, **dadurch gekennzeichnet, dass** die erste Kammer (4a) einen zwischen der ersten Feder (14) und der ersten Dichtung (11) angeordneten Ring (15) umfasst, wobei ein Ende der ersten Feder (14) unter dem Kopf (3) und das andere Ende der ersten Feder (14) auf dem Ring (15) aufliegt, der dazu dient, die erste Dichtung (11) gegen die Anlagefläche (13) zusammenzudrücken, wenn ΔPx und ΔPy im Wesentlichen gleich 0 sind.

10. Ventil (1) nach einem der vorstehenden Ansprüche, **dadurch gekennzeichnet, dass** ein Ende der zweiten Feder (16) auf der Anlagefläche (13) und das andere Ende der zweiten Feder (16) auf einer an der Basis des Schafts (6) vorgesehenen Schulter (6b) abgestützt ist.

11. Ventil (1) nach einem der vorstehenden Ansprüche, **dadurch gekennzeichnet, dass** die Anlagefläche (13) einen Anschlag (13a) aufweist, der mit dem Schaft (6) zusammenwirkt, um die axiale Verschiebung des Kopfes (3) in seine offene Position zu begrenzen.

12. Ventil (1) nach einem der vorstehenden Ansprüche, **dadurch gekennzeichnet, dass** die erste Feder (14) und die zweite Feder (16) Spitze-Spitze-Federn sind.

13. Ventil (1) nach einem der vorstehenden Ansprüche, **dadurch gekennzeichnet, dass** ΔPx größer oder gleich 0,1 bar, vorzugsweise 0,2 bar ist und dass ΔPy größer oder gleich 0,7 bar, vorzugsweise 1 bar ist.

14. Ventil (1) nach einem der vorstehenden Ansprüche, **dadurch gekennzeichnet, dass** das Rohr (4) auf seiner Außenseite eine Markierung aufweist.

15. Armbanduhr mit einem Gehäuse (5), das aus einem Mittelteil, einem Boden und einem Glas gebildet ist, und einen dichten Rauminhalt begrenzt, in dem ein Uhrwerk montiert ist, das mit Mitteln zur Anzeige einer Zeitinformation versehen ist, **dadurch gekennzeichnet, dass** an dem Gehäuse (5) ein Ventil (1) nach einem der Ansprüche 1 bis 14 montiert ist.

## Claims

1. Safety valve (1) including a tube (4) intended to be fixed to a watch case (5) and a hollow head (3) provided with a shaft (6) extending into the hollow part (3), said head (3) being movably mounted on the tube (4) and able to move along an axis defined by the shaft (6) between an open position, in which a fluid overpressure inside the watch case (5) is capable of escaping, and a closed position in which fluid is prevented from escaping, said tube (4) comprising in its internal volume a first spring (14) wound around the shaft (6), the tube (4) being further **characterized in that**:
- an external face of said tube is provided with a cam surface (7) respectively allowing a manual movement of the head (3) to its open position following intervention by a user and an automatic movement of the head (3) towards its open position through the effect of a critical overpressure inside the watch case (5),
- after the first spring (14), the tube includes a second spring (16) wound around the shaft (6) with the second spring (16) separated from the first spring (14) by a step portion (13) traversed by the shaft (6) and integral with the tube (4), the first spring (14) being dimensioned so that the valve (1) is active in the presence of an overpressure ΔPx inside the watch case (5) after manual movement of the head (3) into its open position, the second spring (16) being sized so that the valve (1) is active in the presence of an overpressure ΔPy inside the watch case (5) causing automatic movement of the head (3) into its open position, the second spring (16) having a higher stiffness than that of the first spring (14) so that ΔPy is higher than ΔPx.

2. Valve (1) according to claim 1, **characterized in that** the cam surface (7) is formed of one or more ramps cooperating with recesses (8) of complementary shape made in the inner wall of the head (3).

3. Valve (1) according to claim 2, comprising to ramps each extending over an arc of less than or equal to 180°.

4. Valve according to claim 2 or 3, **characterized in that** the ramps are arranged in an equidistant manner.

5. Valve (1) according to any of claims 2 to 4, **characterized in that** each ramp comprises stop notches (9) at its ends.

6. Valve (1) according to claim 5, **characterized in that** the stop notches (9) or stops are used to set, in a reproducible manner, the position of an inscription or of a logo arranged on the head (3) in the closed and/or open position.

7. Valve (1) according to any of the preceding claims, **characterized in that** the tube (4) includes in its internal volume two chambers (4a, 4b), separated by the step portion (13) with, in succession starting from the head (3), a first chamber (4a) housing the first spring (14) and a second chamber (4b) housing the second spring (16).

8. Valve (1) according to any of the preceding claims, **characterized in that** the valve includes a gasket (10) arranged facing one end of the tube (4) inside an annular housing (12) arranged in the head (3) and another gasket (11), also called the first gasket, intended to be supported on the step portion (13) when ΔPx and ΔPy are substantially equal to 0.

9. Valve (1) according to claim 8, **characterized in that** the first chamber (4a) includes a ring (15) arranged between the first spring (14) and the first gasket (11), one end of the first spring (14) being supported under the head (3) and the other end of the first spring (14) being supported on the ring (15) intended to compress the first gasket (11) against the step portion (13) when ΔPx and ΔPy are substantially equal to 0.

10. Valve (1) according to any of the preceding claims, **characterized in that** one end of the second spring (16) is supported on the step portion (13) and the other end of the second spring (16) is supported on a shoulder (6b) arranged at the base of the shaft (6).

11. Valve (1) according to any of the preceding claims, **characterized in that** the step portion (13) includes a stop (13) cooperating with the shaft (6) to limit the axial movement of the head (3) towards its open position.

12. Valve (1) according to any of the preceding claims, **characterized in that** the first spring (14) and the second spring (16) are crest-to-crest springs.

13. Valve (1) according to any of the preceding claims, **characterized in that** ΔPx is higher than or equal to 1 bar, preferably higher than or equal to 2 bar, and **in that** ΔPy is higher than or equal to 3 bar, preferably higher than or equal to 4 bar.

14. Valve (1) according to any of the preceding claims, **characterized in that** the tube (4) includes a mark on its external face.

15. Watch comprising a case (5) formed of a case middle, a back cover and a crystal delimiting a sealed volume in which is mounted a timepiece movement provided with a means for displaying time information, **characterized in that** a valve (1) according to any of claims 1 to 14 is mounted on the case (5).
